# EUROPEAN PATENT APPLICATION

(11) **EP 2 627 031 A1**
(43) Date of publication of application: **14.08.2013**
(21) Application number: 12787626.6
(22) Date of filing: 13.04.2012
(51) Int. Cl.: H04L 12/00

(54) **LAYER 2 NETWORK LOOP PROCESSING METHOD, DEVICE AND NETWORK DEVICE**

(30) Priority: 09.12.2011 WO PCT/CN2011/083791
(71) Applicant: Huawei Technologies Co., Ltd, Shenzhen, Guangdong 518129 (CN)
(72) Inventor: ZHANG, Xia, Shenzhen, Guangdong 518129 (CN)
(74) Representative: Epping - Hermann - Fischer
(86) International application number: PCT/CN2012/073995
(87) International publication number: WO 2013/082907

(57) **Abstract**

Embodiments of the present invention provide a method for processing a Layer 2 network loop, where the method includes: receiving a packet sent by a user, and obtaining a source medium access control MAC address of the packet; when a latest port among ports that are associated with the source MAC address in an MAC table is inconsistent with a receiving port of the packet, determining that transition of the source MAC address occurs once; when the number of times of transition of the source MAC address reaches a preset transition threshold, sending a detection packet respectively through the ports that participate in the transition of the source MAC address; and when the detection packet is received, determining a port that receives the detection packet as a port at which a loop is generated, and blocking the port at which the loop is generated. The present invention further provides an apparatus and a network device for processing a Layer 2 network loop. By using the method, the apparatus, and the network device that are provided in the embodiments of the present invention, a port at which a loop occurs can be precisely determined, a problem that a loop occurs in a Layer 2 network can be effectively solved, and reliability of network operation is ensured.

## Description

This application claims priority to Chinese Patent Application No. PCT/CN2011/083791, filed with the Chinese Patent Office on December 9, 2011, and entitled "METHOD, APPARATUS, AND NETWORK DEVICE FOR PROCESSING LAYER 2 NETWORK LOOP", which is incorporated herein by reference in its entirety.

### FIELD OF THE INVENTION

Embodiments of the present invention relate to the field of communications technologies, and in particular, to a method, an apparatus, and a network device for processing a Layer 2 network loop.

### BACKGROUND OF THE INVENTION

A layer 2 network of a current virtual private switched network service (Virtual Private LAN Service, VPLS) is a widely applied metropolitan area network solution. In an actual network application, each network device has a globally unique medium access control (Medium Access Control, MAC) address; however, a MAC address transition problem always occurs in a working process of a network device. When a network device receives a packet of a certain source MAC address from a port of the network device, the network device learns correspondence between the MAC address of the packet and the port. Before aging of the MAC address, the network device receives a packet of the same source MAC address from another port of the network device, that is, when the MAC address moves from one port to another port, MAC address transition occurs. In an actual network application, an MAC address of each network device is generally unique; therefore, it is less likely to cause MAC address transition due to repetition of a MAC address of a network device. A main reason of the MAC address transition is that a network forms a loop. When a network device of a certain user sends a packet, if the packet is sent to different ports of the same network device through two paths, the network forms a loop. MAC address transition caused by a network loop may cause problems such as a network storm and network congestion.

In the prior art, a Layer 2 network loop can be processed by using an MAC address flapping MAC-Flapping processing method, where the method is based on MAC learning. When transition of egress ports corresponding to a certain MAC address in an MAC forwarding table is sensed, these egress ports that possibly participate in the transition are blocked together or in batches according to a certain rule. By using an existing MAC-Flapping method, real ports at which a loop is generated cannot be precisely blocked, but all egress ports that possibly participate in the transition are blocked together or in batches; in this way, possibly, some egress ports at which a loop is not generated may also be blocked, and users connected to these ports cannot continue communication.

### SUMMARY OF THE INVENTION

Embodiments of the present invention provide a method, an apparatus, and a network device for processing a Layer 2 network loop, so as to solve a problem of imprecise detection of a Layer 2 network loop. To achieve the foregoing objective, an embodiment of the present invention provides a method for processing a Layer 2 network loop, where the method includes:
receiving a packet sent by a user, and obtaining a source medium access control MAC address of the packet;
when a latest port among ports that are associated with the source MAC address in an MAC table is inconsistent with a receiving port of the packet, determining that transition of the source MAC address occurs once, where the ports that are associated with the source MAC address and the receiving port of the packet are ports that participate in the transition of the source MAC address, and the latest port is a last port that receives, before the packet is received, a packet, a source address of which is the source MAC address;
when the number of times of transition of the source MAC address reaches a preset transition threshold, sending a detection packet respectively through the ports that participate in the transition of the source MAC address; and
when the detection packet is received, determining a port that receives the detection packet as a port at which a loop is generated, and blocking the port at which the loop is generated.

An embodiment of the present invention provides an apparatus for processing a Layer 2 network loop, where the apparatus includes:
a receiving unit, configured to receive a packet sent by a user, and obtain a source medium access control MAC address of the packet;
a determining unit, configured to, when a latest port among ports that are associated with the source MAC address in an MAC table is inconsistent with a receiving port of the packet, determine that transition of the source MAC address occurs once, where the ports that are associated with the source MAC address and the receiving port of the packet are ports that participate in the transition of the source MAC address, and the latest port is a last port that receives, before the packet is received, a packet, a source address of which is the source MAC address;
a detecting unit, configured to, when the number of times of transition of the source MAC address reaches a preset transition threshold, send a detection packet respectively through the ports that participate in the transition of the source MAC address; and
a processing unit, configured to, when the detection packet is received, determine a port that receives the detection packet as a port at which a loop is generated, and block the port at which the loop is generated.

An embodiment of the present invention provides a network device for processing a Layer 2 network loop, where the network device includes the apparatus provided in the embodiment of the present invention.

In conclusion, the embodiments of the present invention provide a method, an apparatus, and a network device for processing a Layer 2 network loop, so that a port at which a loop occurs can be precisely determined, thereby effectively solving a problem of the Layer 2 network loop, and ensuring reliability of network operation.

### BRIEF DESCRIPTION OF THE DRAWINGS

To illustrate the technical solutions in the embodiments of the present invention or in the prior art more clearly, the accompanying drawings required for describing the embodiments or the prior art are described briefly in the following. Apparently, the accompanying drawings in the following description merely show some embodiments of the present invention, and persons of ordinary skill in the art may also derive other drawings from these accompanying drawings without creative efforts.

FIG. 1 is a flowchart of a method for processing a Layer 2 network loop according to Embodiment 1 of the present invention;

FIG. 2 is a schematic diagram of a method for processing a Layer 2 network loop according to an embodiment of the present invention;

FIG. 3 is a schematic diagram of an apparatus for processing a Layer 2 network loop according to Embodiment 2 of the present invention; and

FIG. 4 is a schematic diagram of another apparatus for processing a Layer 2 network loop according to Embodiment 2 of the present invention.

### DETAILED DESCRIPTION OF THE EMBODIMENTS

To make the objectives, technical solutions, and advantages in the embodiments of the present invention more comprehensible, the technical solutions in the embodiments of the present invention are described clearly and completely in the following with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

### Embodiment 1

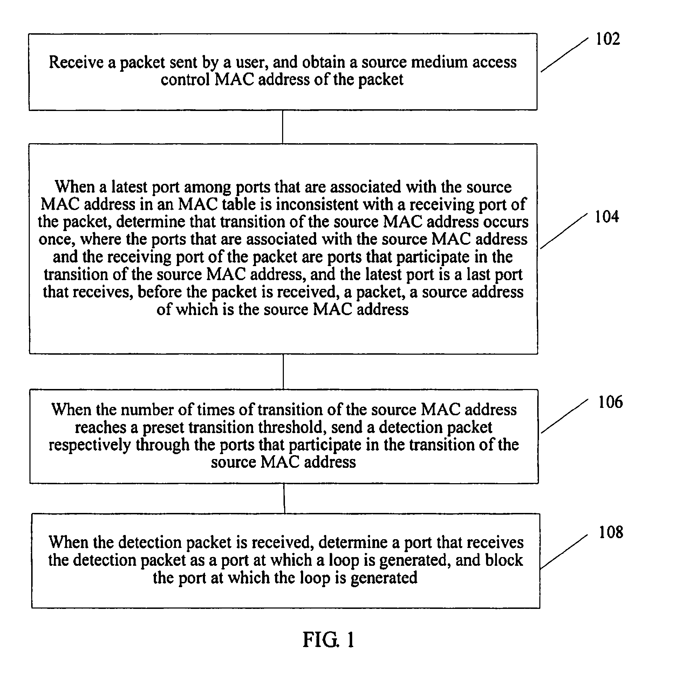

An embodiment of the present invention provides a method for processing a Layer 2 network loop. Referring to FIG. 1, FIG. 1 is a flowchart of the method according to this embodiment of the present invention, where the method includes:

102: Receive a packet sent by a user, and obtain a source MAC address of the packet.

104: When a latest port among ports that are associated with the source MAC address in an MAC table is inconsistent with a receiving port of the packet, determine that transition of the source MAC address occurs once, where the ports that are associated with the source MAC address and the receiving port of the packet are ports that participate in the transition of the source MAC address, and the latest port is a last port that receives, before the packet is received, a packet, a source address of which is the source MAC address.

106: When the number of times of transition of the source MAC address reaches a preset transition threshold, send a detection packet respectively through the ports that participate in the transition of the source MAC address.

When Layer 2 networks intercommunicate, packet forwarding is implemented directly by searching for an MAC address, and whether MAC address learning is correct determines whether correct intercommunication can be performed between users. An MAC address learning mechanism of a network device is that: When a port receives a packet of an unknown source MAC address, the MAC address is added to an MAC address table that is stored in the network device, where the MAC address table is a set of source MAC addresses of packets received by the network device, and each MAC address entry includes one MAC address and a port that has an association relationship with the MAC address; and the association relationship means that a packet that uses the MAC address as a source MAC is received from the port, and multiple ports that have the association relationship with the MAC address may exist. For example, the network device first receives a packet that uses the MAC as a source MAC from a port A, and then receives a packet that uses the MAC as a source MAC from a port B, where the port A and the port B are both ports that have an association relationship with the MAC, and the port B that last receives a packet that uses the MAC as the source MAC is a latest port that has an association relationship with the MAC; subsequently, if the network device further receives a packet that uses the MAC as a source MAC from a port C, the port C is the latest port that has an association relationship with the MAC, and the port B is no longer the latest port that has an association relationship with the MAC. During implementation of this embodiment of the present invention, after receiving the packet sent by the user, the network device obtains the source MAC address of the packet through parsing, searches, according to the source MAC address, an MAC table stored in the network device, and finds that the source MAC address exists in an MAC address table and that a latest port among ports that are associated with the source MAC address is not a port from which the network device receives the packet sent by the user. It is considered that transition of the source MAC address occurs once, and the ports that are associated with the MAC address in the MAC address table of the network device and the receiving port of the packet are all considered as ports that participate in the transition of the source MAC address. A loop possibly occur at all ports that participate in the transition of the source MAC address, and a detection packet needs to be sent through the ports that participate in the transition of the source MAC address. Further, factors such as an operation of network device management personnel may cause that transition of some MAC addresses occurs occasionally, which has no impact on a normal network function. To avoid a case of sending the detection packet frequently, a preset transition threshold may be set in advance, and the preset transition threshold is set to 1 by default. It is considered that a loop occurs in a network only when the number of times of transition of the source MAC address exceeds the preset transition threshold, and then a detection packet is sent through the ports that participate in the transition of the source MAC address. For example, when the preset transition threshold is set to 3 in advance, if the network device receives a packet, a source MAC of which is an MAC address N, and within one second, a port that receives the packet that uses the MAC address N as a source MAC changes from a port A to a port B, then changes from the port B to a port C, and afterwards changes from the Port C to a port D, it is considered that a loop possibly occur at all of the port A, the port B, the port C, and the port D that participate in transition of the source MAC address N, and a detection packet is sent respectively through the port A, the port B, the port C, and the port D. In addition, the transition of the MAC address also includes a case that transition occurs many times between several ports; for example, the port that receives the packet that uses the MAC address N as the source MAC changes from the port A to the port B, then changes from the port B to the port A, and afterwards changes from the port A to the port B, that is, the transition of the MAC address occurs three times.

On the network device, the network management personnel often set priorities for ports according to importance of services undertaken by the ports of the network device, for example, a high priority is set for a port that is connected to a server, and a low priority is set for a port that is connected to a common user. Correspondingly, in this embodiment of the present invention, before the sending of the detection packet respectively through the ports that participate in the transition of the source MAC address, further, grouping is performed according to priorities of the ports that participate in the transition of the source MAC address, to obtain a high priority group and a low priority group. A detection packet is preferentially sent through a port that belongs to the low priority group, and a detection packet is sent through a port that belongs to the high priority group later. In this way, an impact on a high priority service can be avoided to the greatest extent. In an actual existing network application, generally, a loop easily occurs at a port that is connected to a user; therefore, a detection packet is preferentially sent to a low priority port, and the port is preferentially blocked when a loop is found, so as to reduce an impact on a service at a high priority port as much as possible. The detection packet may be a data packet of an Ethernet type, and reference may be made to RFC 894 for a specific packet encapsulation format.

108: When the detection packet is received, determine a port that receives the detection packet as a port at which a loop is generated, and block the port at which the loop is generated.

Because a user equipment or a server that is connected to a port that participates in the transition of the source MAC address directly discards the received detection packet in a normal case. The detection packet is directly and transparently transmitted and is returned along a sending path of the detection packet only when a loop occurs at the user equipment or the server. If the network device receives the detection packet from any one of the ports that participate in the transition of the source MAC address, it is considered that the port that receives the detection packet is a port at which a loop is generated, and the port at which the loop is generated is blocked and a working capability of the port is disabled, so as to solve a problem that the port at which the loop occurs has an impact on a network. Correspondingly, according to step 106 in which the detection packet is preferentially sent to the low priority group, if a low priority port has a fault, the port is preferentially blocked, which can avoid an impact on a high priority service to the greatest extent. Further, a preset unblocking time threshold is set in advance. When blocking time of an egress port at which the loop is generated reaches the preset unblocking time threshold, the egress port at which the loop is generated is unblocked, so that the egress port can work normally. In an actual application, some ports at which a loop occurs can perform self-repair; therefore, if an unblocked port does not participate in the transition of the MAC address, the port is no longer blocked, and if the port participates in the transition of the MAC address again, corresponding processing is performed according to a solution provided in this embodiment of the present invention.

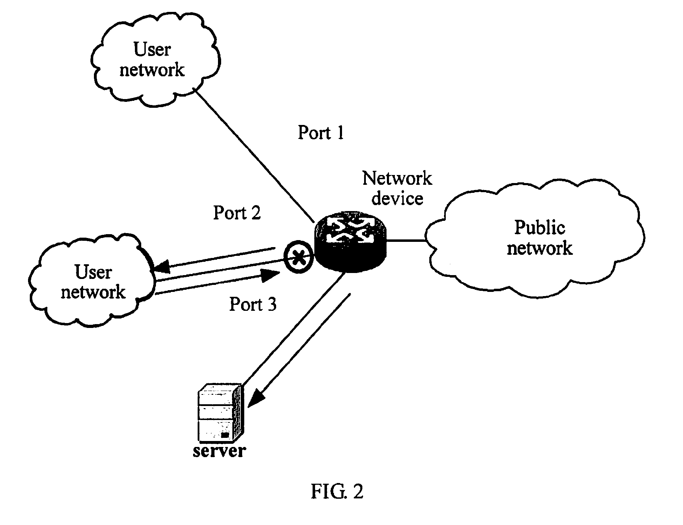

To make the embodiment of the present invention more comprehensive, examples are given in the following for description. As shown in FIG. 2, a network device has three egress ports: a port 1, a port 2, and a port 3. The port 1 and the port 2 are connected to a common user, and the port 3 is connected to a server. According to a service priority, a low priority is set for the port 1 and the port 2 that are connected to the common user, and a high priority is set for the port 3 that is connected to the server. A preset transition threshold is set to 1 in advance, and a preset unblocking time threshold is set to 60 seconds in advance. When receiving a user packet from the port 2, the network device obtains, through parsing, that a source MAC of the packet is an address A, and finds, by searching for an MAC table, that a port that is associated with the MAC address A in the MAC table is the port 3, which is inconsistent with the port 2 that receives the user packet, it indicates that transition of the MAC address occurs once, and the preset transition threshold 1 that is set in advance is reached. It is considered that the port 2 and the port 3 both participate in the transition of the MAC address A. The network device sends a detection packet respectively through the port 2 and the port 3, and further, performs grouping according to priorities of the ports, where the port 2 is grouped into a low priority group, and the port 3 is grouped into a high priority group. A detection packet is preferentially sent to the port 2 in the low priority group. Because the port 1 does not participate in the transition of the MAC address A, no detection packet needs to be sent to the port 1. After receiving the detection packet from the port 2, the network device determines that the port 2 is a port at which a loop occurs, and blocks the port 2, so as to avoid an impact of the port 2 on a network. Further, when blocking time of the port 2 reaches the preset unblocking time threshold 60 seconds that is set in advance, the port 2 is unblocked and is allowed to work normally.

It can be seen that, by using the method provided in this embodiment of the present invention, a port at which a loop occurs can be precisely determined, a problem of a Layer 2 network loop is effectively solved, and reliability of network operation is ensured; especially, when a network device has multiple ports, by using the method provided in this embodiment of the present invention, ports that participate in transition of a MAC address are first determined, and then a detection packet is sent through the ports that participate in the transition of the MAC address, so that the network device does not need to send a detection packet through all ports in real time, and therefore, an impact of occupying a CPU of the network device can be reduced.

### Embodiment 2

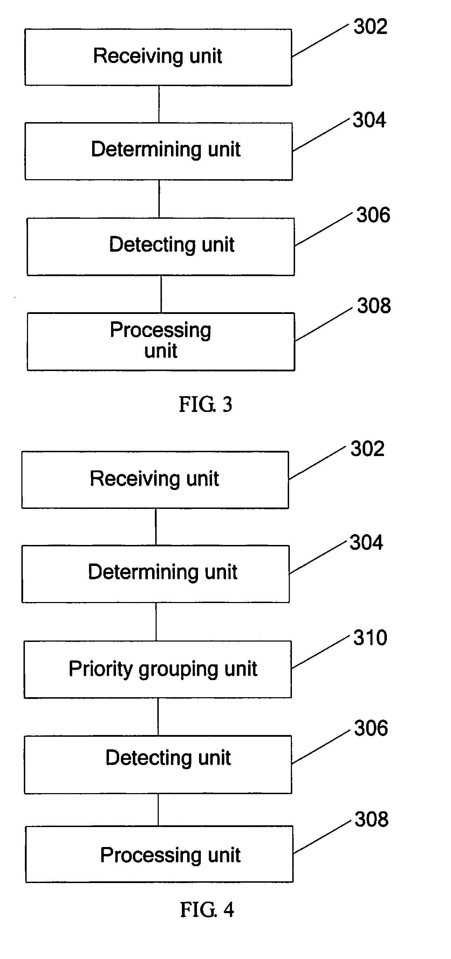

An embodiment of the present invention provides an apparatus for processing a Layer 2 network loop. FIG. 3 is a schematic diagram of the apparatus according to the embodiment of the present invention, and referring to FIG. 3, the apparatus includes a receiving unit 302, a determining unit 304, a detecting unit 306, and a processing unit 308.

The receiving unit 302 is configured to receive a packet sent by a user, and obtain a source MAC address of the packet.

The determining unit 302 is configured to, when a latest port among ports that are associated with the source MAC address in an MAC table is inconsistent with a receiving port of the packet, determine that transition of the source MAC address occurs once, where the ports that are associated with the source MAC address and the receiving port of the packet are ports that participate in the transition of the source MAC address, and the latest port is a last port that receives, before the packet is received, a packet, a source address of which is the source MAC address.

The detecting unit 306 is configured to, when the number of times of transition of the source MAC address reaches a preset transition threshold, send a detection packet respectively through the ports that participate in the transition of the source MAC address.

When Layer 2 networks intercommunicate, packet forwarding is implemented directly by searching for an MAC address, and whether MAC address learning is correct determines whether correct intercommunication can be performed between users. An MAC address learning mechanism of a network device is that: When a port receives a packet of an unknown source MAC address, the MAC address is added to the port that receives the packet, so that subsequently, a packet that uses the MAC address as a destination can be directly forwarded. Meanwhile, the MAC address is added to an MAC address table that is stored in the network device, where the MAC address table is a set of source MAC addresses of packets received by the network device, and each MAC address entry includes one MAC address and a port that has an association relationship with the MAC address; and the association relationship means that a packet that uses the MAC address as a source MAC is received from the port, and multiple ports that have the association relationship with the MAC address may exist. For example, the network device first receives a packet that uses the MAC as a source MAC from a port A, and then receives a packet that uses the MAC as a source MAC from a port B, where the port A and the port B are both ports that have an association relationship with the MAC, and the port B that last receives a packet that uses the MAC as the source MAC is a latest port that has an association relationship with the MAC; subsequently, if the network device further receives a packet that uses the MAC as a source MAC from a port C, the port C is the latest port that has an association relationship with the MAC, and the port B is no longer the latest port that has an association relationship with the MAC. During implementation of this embodiment of the present invention, after receiving the packet sent by the user, the receiving unit 302 of the network device obtains the source MAC address of the packet through parsing; and the determining unit 304 searches, according to the source MAC address, an MAC table stored in the network device, and finds that the source MAC address exists in an MAC address table and that a latest port among ports that are associated with the source MAC address is not a port from which the network device receives the packet sent by the user. It is considered that transition of the source MAC address occurs once, and the ports that are associated with the MAC address in the MAC address table of the network device and the receiving port of the packet are all considered as ports that participate in the transition of the source MAC address. A loop possibly occur at all ports that participate in the transition of the source MAC address, and a detection packet needs to be sent through the ports that participate in the transition of the source MAC address. Further, factors such as an operation of network device management personnel may cause that transition of some MAC addresses occurs occasionally, which has no impact on a normal network function. To avoid a case of sending the detection packet frequently, the detecting unit 306 may set a preset transition threshold in advance, and set the preset transition threshold to 1 by default. It is considered that a loop occurs in a network only when the number of times of transition of the source MAC address exceeds the preset transition threshold, and then a detection packet is sent through the ports that participate in the transition of the source MAC address. For example, when the preset transition threshold is set to 3 in advance, if the network device receives a packet, a source MAC of which is an MAC address N, and within one second, a port that receives the packet that uses the MAC address N as a source MAC changes from a port A to a port B, then changes from the port B to a port C, and afterwards changes from the Port C to a port D, it is considered that a loop possibly occur at all of the port A, the port B, the port C, and the port D that participate in transition of the source MAC address N, and a detection packet is sent through the port A, the port B, the port C, and the port D. In addition, the transition of the MAC address also includes a case that transition occurs many times between several ports; for example, the port that receives the packet that uses the MAC address N as the source MAC changes from the port A to the port B, then changes from the port B to the port A, and afterwards changes from the port A to the port B, that is, the transition of the MAC address occurs three times.

On the network device, the network management personnel often set priorities for ports according to importance of services undertaken by the ports of the network device, for example, a high priority is set for a port that is connected to a server, and a low priority is set for a port that is connected to a common user. Correspondingly, the apparatus for processing a Layer 2 network loop provided in this embodiment of the present invention may further include a priority grouping unit 310, as shown in FIG. 4. Before the detecting unit 310 sends a detection packet, the priority grouping unit 310 is configured to perform grouping according to priorities of the ports that participate in the transition of the source MAC address, to obtain a high priority group and a low priority group. Correspondingly, the detecting unit 306 is configured to preferentially send a detection packet through a port in the low priority group, and send a detection packet through a port in the high priority group later. In this way, an impact on a high priority service can be avoided to the greatest extent. In an actual existing network application, generally, a loop easily occurs at a port that is connected to a user; therefore, a detection packet is preferentially sent to a low priority port, and the port is preferentially blocked when a loop is found, so as to reduce an impact on a service at a high priority port as much as possible. The detection packet may be a data packet of an Ethernet type, and reference may be made to RFC 894 for a specific packet encapsulation format.

The processing unit 308 is configured to, when the detection packet is received, determine a port that receives the detection packet as a port at which a loop is generated, and block the port at which the loop is generated.

Because a user equipment or a server that is connected to a port that participates in the transition of the source MAC address directly discards the received detection packet in a normal case. The detection packet is directly and transparently transmitted and is returned along a sending path of the detection packet only when a loop occurs at the user equipment or the server. If the processing unit 308 of the network device receives the detection packet from any one of the ports that participate in the transition of the source MAC address, it is considered that the port that receives the detection packet is a port at which a loop is generated, and the port at which the loop is generated is blocked and a working capability of the port is disabled, so as to solve a problem that the port at which the loop occurs has an impact on a network. Correspondingly, according to that the detection packet is preferentially sent to the low priority group, if a low priority port has a fault, the port is preferentially blocked, which can avoid an impact on a high priority service to the greatest extent. Further, a preset unblocking time threshold may be set in advance. Correspondingly, the processing unit 308 is further configured to, when blocking time of an egress port at which the loop is generated reaches the preset unblocking time threshold, unblock the egress port at which the loop is generated, so that the egress port can work normally. In an actual application, some ports at which a loop occurs can perform self-repair; therefore, if an unblocked port does not participate in the transition of the MAC address, the port is no longer blocked, and if the port participates in the transition of the MAC address again, corresponding processing is performed according to a solution provided in this embodiment of the present invention.

The apparatus provided in this embodiment of the present invention may be implemented through a chip, for example, the apparatus may be implemented through a field programmable gate array (Field Programmable Gate Array, FPGA) or an application specific integrated circuit (Application Specific Integrated Circuit, ASIC).

It can be seen that, by using the apparatus provided in this embodiment of the present invention, a port at which a loop occurs can be precisely determined, a problem of a Layer 2 network loop is effectively solved, and reliability of network operation is ensured; especially, when a network device has multiple ports, by using the method provided in this embodiment of the present invention, ports that participate in the transition of the MAC address are first determined, and then a detection packet is sent through the ports that participate in the transition of the MAC address, so that the network device does not need to send a detection packet through all ports in real time, and therefore, an impact of occupying a CPU of the network device can be reduced.

### Embodiment 3

An embodiment of the present invention provides a network device for processing a Layer 2 network loop. The network device includes the apparatus provided in Embodiment 2 of the present invention, and the network device may be a router, a switch, or a network device that supports a Layer 2 network.

Persons of ordinary skill in the art may understand that all or part of steps according to the method embodiments of the present invention may be implemented by a program instructing relevant hardware. The program may be stored in a computer readable storage medium. When the program is executed, the steps of the method embodiments are performed. The storage medium includes any medium that is capable of storing program codes, such as a ROM, a RAM, a magnetic disk, or an optical disc.

Finally, it should be noted that the embodiments are only intended for describing the technical solutions of the present invention rather than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features of the technical solutions; however, these modifications or substitutions do not cause the essence of corresponding technical solutions to depart from the spirit and scope of the technical solutions of the embodiments of the present invention.

## Claims

1. A method for processing a Layer 2 network loop, comprising:
receiving a packet sent by a user, and obtaining a source medium access control MAC address of the packet;
when a latest port among ports that are associated with the source MAC address in an MAC table is inconsistent with a receiving port of the packet, determining that transition of the source MAC address occurs once, wherein the ports that are associated with the source MAC address and the receiving port of the packet are ports that participate in the transition of the source MAC address, and the latest port is a last port that receives, before the packet is received, a packet, a source address of which is the source MAC address;
when the number of times of transition of the source MAC address reaches a preset transition threshold, sending a detection packet respectively through the ports that participate in the transition of the source MAC address; and
when the detection packet is received, determining a port that receives the detection packet as a port at which a loop is generated, and blocking the port at which the loop is generated.

2. The method according to claim 1, wherein the preset transition threshold is 1 by default.

3. The method according to claim 1 or 2, wherein before the sending a detection packet respectively through the ports that participate in the transition of the source MAC address, the method further comprises:
performing grouping according to priorities of the ports that participate in the transition of the source MAC address, to obtain a high priority group and a low priority group, preferentially sending a detection packet through a port in the low priority group, and sending a detection packet through a port in the high priority group later.

4. The method according to any one of claims 1 to 3, further comprising:
when blocking time of the port at which the loop is generated reaches a preset unblocking time threshold, unblocking the port at which the loop is generated.

5. An apparatus for processing a Layer 2 network loop, comprising:
a receiving unit, configured to receive a packet sent by a user, and obtain a source medium access control MAC address of the packet;
a determining unit, configured to, when a latest port among ports that are associated with the source MAC address in an MAC table is inconsistent with a receiving port of the packet, determine that transition of the source MAC address occurs once, wherein the ports that are associated with the source MAC address and the receiving port of the packet are ports that participate in the transition of the source MAC address, and the latest port is a last port that receives, before the packet is received, a packet, a source address of which is the source MAC address;
a detecting unit, configured to, when the number of times of transition of the source MAC address reaches a preset transition threshold, send a detection packet respectively through the ports that participate in the transition of the source MAC address; and
a processing unit, configured to, when the detection packet is received, determine a port that receives the detection packet as a port at which a loop is generated, and block the port at which the loop is generated.

6. The apparatus according to claim 5, wherein the preset transition threshold is 1 by default.

7. The apparatus according to claim 5 or 6, further comprising:
a priority grouping unit, configured to, before the detecting unit sends a detection packet, perform grouping according to priorities of the ports that participate in the transition of the source MAC address, to obtain a high priority group and a low priority group, wherein correspondingly, the detecting unit is configured to preferentially send a detection packet through a port in the low priority group, and send a detection packet through a port in the high priority group later.

8. The apparatus according to any one of claims 5 to 7, wherein the processing unit is further configured to, when blocking time of the port at which the loop is generated reaches a preset unblocking time threshold, unblock the egress port at which the loop is generated.

9. The apparatus according to any one of claims 5 to 8, wherein the apparatus may be implemented through a field programmable gate array FGPA or an application specific integrated circuit ASIC.

10. A network device for processing a Layer 2 network loop, comprising the apparatus according to any one of claims 5 to 8, wherein the network device may be a router, a switch, or a network device that supports a Layer 2 network.
